# FASCICULE DE BREVET EUROPEEN

(11) **EP 3 814 403 B1**
(45) Date de publication et mention de la délivrance du brevet: **28.12.2022**
(21) Numéro de dépôt: 19740491.6
(22) Date de dépôt: 27.06.2019
(51) Int. Cl.: C08J 3/075, C08J 3/28

(54) **METHODE GENERIQUE POUR LA STRUCTURATION D'HYDROGELS**
GENERISCHES VERFAHREN ZUR STRUKTURIERUNG VON HYDROGELEN
GENERIC METHOD FOR STRUCTURING HYDROGELS

(30) Priorité: 27.06.2018 FR 1855812
(43) Date de publication de la demande: 05.05.2021
(73) Titulaire: Alveole, 75005 Paris (FR); Centre national de la recherche scientifique, 75016 Paris (FR); Université de Bordeaux, 33000 Bordeaux (FR)
(72) Inventeur: STUDER, Vincent, 3300 Bordeaux (FR); PASTUREL, Aurélien, 84600 Valréas (FR)
(74) Mandataire: Osha Liang
(86) Numéro de dépôt international: PCT/EP2019/067137
(87) Numéro de publication internationale: WO 2020/002495

(56) Documents cités:
- WO-A1-2015/010019
- US-B1- 8 343 710
- A. M. KLOXIN ET AL.: "Photodegradable hydrogels for dynamic tuning of physical and chemical properties", SCIENCE, vol. 324, 3 avril 2009 (2009-04-03), pages 59-63, XP002788888, cité dans la demande
- O. SARIG-NADIR ET AL.: "Laser photoablation of guidance microchannels into hydrogels directs cell growth in three dimensions", BIOPHYSICAL JOURNAL, vol. 96, juin 2009 (2009-06), pages 4743-4752, XP002788889, cité dans la demande
- A. PASTUREL ET AL.: "Tailoring 3D cell culture templates with common hydrogels.", BIORXIV, 20 juillet 2018 (2018-07-20), XP002794193,

## Description

### DOMAINE TECHNIQUE

La présente invention concerne une méthode ou procédé générique de micro-structuration d'hydrogels par la lumière.

### ARRIERE PLAN

La micro-fabrication ou micro-structuration d'hydrogel au moyen d'une lumière est effectuée de façon connue dans l'art antérieur, notamment pour des hydrogels particuliers, par l'utilisation d'un groupement photo-clivable directement greffé dans le précurseur du gel (« Photo-degradable hydrogels for dynamic tuning of physical and chemical properties », Science. 2009 April 3 ; 324(5923) : 59-63) ou au moyen de lasers infrarouges dits « femtosecondes», d'ultra-haute puissance, balayés point par point sur la surface d'un hydrogel quelconque (« Laser photo-ablation of guidance microchannels into hydrogels directs cell growth in three dimensions », Biophysical Journal Vol. 96 June 2009 4743-4752). Voir également le document WO 2015/010019 A1 pour l'utilisation de groupements photo-clivables dans la formation et la dégradation d'hydrogels.

Il n'existe pas toutefois dans l'art antérieur de moyen de dégrader des hydrogels de nature très variée (ne possédant pas de groupement photo-clivable) en plein champ ou en champ large, c'est-à-dire sur une multitude de points d'une surface, simultanément.

### PRESENTATION GENERALE

L'invention concerne dans ce contexte, un procédé soustractif pour la structuration d'un hydrogel tel que défini dans la revendication indépendante annexée. Des modes de mise en œuvre particuliers sont définis dans les revendications dépendantes.

Un tel procédé comprend les étapes suivantes :
- réaliser sur un substrat une couche d'hydrogel contenant une benzophénone ;
- mettre en contact la couche d'hydrogel avec un réservoir d'oxygène ;
- éclairer sélectivement la couche d'hydrogel avec une lumière, pour la transformer en un liquide ; et
- éliminer le liquide.

L'invention concerne les hydrogels ne possédant pas de groupement photo-clivable, c'est-à-dire les hydrogels qui ne sont pas photo-dégradables.

C'est l'éclairage de la couche d'hydrogel avec une lumière capable d'activer la benzophénone qui permet, en présence d'oxygène et du fait de l'activation de la benzophénone, de transformer la zone éclairée de la couche d'hydrogel en liquide. Dans le présent exposé, on appelle "réservoir d'oxygène" tout moyen permettant de garantir la présence d'oxygène nécessaire à la transformation précitée et, plus précisément, au phénomène de photo-scission de la matrice de l'hydrogel, découvert par les inventeurs. L'air peut constituer un tel réservoir d'oxygène.

Les caractéristiques et avantages précités, ainsi que d'autres, apparaîtront à la lecture de la description détaillée qui suit, d'exemples de réalisation. Cette description détaillée fait référence aux dessins annexés. Il est toutefois rappelé que l'invention ne se limite pas à ces exemples.

### BREVE DESCRIPTION DES DESSINS

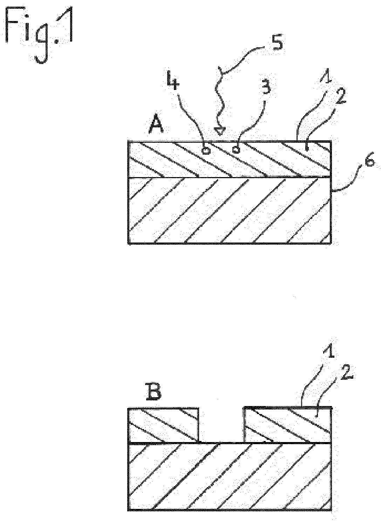

La figure 1 (Fig. 1) représente deux états d'un hydrogel soumis au procédé de l'invention : un premier état (A) et un deuxième état (B).

### DESCRIPTION DÉTAILLÉE DE MODES DE RÉALISATION

La culture des cellules dans des conditions physiologiques exige de créer des hydrogels qui reproduisent les formes, les forces et les signaux chimiques qui entourent les cellules et conditionnent leur comportement.

Toutefois, obtenir des hydrogels finement conformables et adaptables en dimension exige habituellement des investissements lourds en chimie et/ou en matériel optique de forte puissance.

Pour la majorité des hydrogels, il existe ainsi un besoin d'un moyen suffisamment général, applicable à leur micro-usinage, notamment soustractif, pour enlever de l'hydrogel à partir de sa surface et le creuser ou pour réaliser des micro-canaux à l'intérieur d'une couche d'un hydrogel quelconque.

En effet, une telle réalisation permet d'envisager de croître sur les couches d'hydrogel, ainsi modifiée ou usinées, notamment des neurones ou des lignées de cellules utiles en biologie cellulaire.

Dans la présente demande, on considérera qu'un hydrogel est un ensemble diphasique mou constitué d'une phase liquide qui est une solution aqueuse et d'une phase solide ou matrice, de faible dureté ou molle ou viscoélastique.

Le concept inventif général de l'invention est alors, dans ce contexte, d'insoler ou illuminer sélectivement un hydrogel dont la phase liquide contient ou comprend de l'oxygène et une benzophénone. Les inventeurs ont en effet découvert un nouvel effet de photo-scission de la matrice d'un hydrogel, associé à cette opération, au titre duquel la partie solide de l'hydrogel illuminée est transformée soit en liquide, soit en morceaux ou radicaux de faible encombrement, portés par la phase liquide de l'hydrogel et transportables à travers la matrice de l'hydrogel avec cette phase liquide.

Il est alors possible ensuite d'éliminer et de renouveler la phase liquide par rinçage, notamment à l'eau, pour éliminer les parties solides insolées de l'hydrogel, littéralement liquéfiées, ainsi que la benzophénone contenue dans la phase liquide de l'hydrogel, pour obtenir finalement un hydrogel structuré physiquement de façon soustractive dans les parties insolées et de matrice non modifiée chimiquement ailleurs.

Les inventeurs ont découvert que le phénomène de photo-scission en présence de benzophénone (ou photo-initiateur) et d'oxygène était applicable de façon surprenante à de nombreux types d'hydrogels et qu'il pouvait s'appliquer au moins aux hydrogels permettant la diffusion de la benzophénone choisie et d'oxygène à l'intérieur de leur matrice, via leur phase liquide.

Dans tous les modes de réalisation de l'invention, l'hydrogel à micro-structurer devra être en contact avec un réservoir d'oxygène permettant son renouvellement par diffusion dans la phase liquide, les inventeurs ont en effet observé que l'oxygène est consommé ou qu'en tous cas sa concentration diminue dans la phase liquide lors de la photo-scission de la matrice.

Dans tous les modes de réalisation de l'invention, le photo-initiateur de la photo-scission est soluble dans l'eau, plus particulièrement le photo-initiateur de la photo-scission est une benzophénone soluble dans l'eau et, en particulier, le photo-initiateur de la photo-scission est une benzophénone soluble dans l'eau, de type PLPP ou 4-benzoylbenzyl)trimethylammonium chloride.

Dans tous les modes de réalisation de l'invention, l'hydrogel est supposé transparent pour la source d'illumination sélective utilisée et perméable à l'oxygène, de façon à pouvoir obtenir un effet de structuration en profondeur, la photo-scission ayant lieu de manière homogène dans tout le volume éclairé.

Dans un premier mode de réalisation, en référence à la figure 1, un hydrogel, par exemple un hydrogel de PEG déposé sur un substrat 6, est soumis au procédé de l'invention et passe d'un premier état A à un deuxième état B. Dans le premier état A, l'hydrogel contenant ou comprenant un PEG 1 et de l'eau 2, contient aussi une benzophénone 3 et de l'oxygène 4 et est éclairé par une lumière 5. Après un temps d'insolation et un rinçage à l'eau, l'hydrogel passe dans le second état B, dans lequel de la matière de l'hydrogel a été soustraite à l'endroit de l'insolation et dans lequel la benzophénone 3 a disparu, laissant, dans l'hydrogel, un canal ou tranchée, creusé jusqu'au substrat 6. En d'autres termes, l'hydrogel étant soustrait de façon homogène dans la zone de l'hydrogel ayant été éclairée, la matière soustraite forme un trou débouchant sur le substrat 6 ou une tranchée ou un canal, au sens d'un sillon traversant l'hydrogel jusqu'au substrat 6.

Dans ce premier mode de réalisation, un hydrogel de PEG ou poly-éthylène-glycol est ainsi utilisé. Le PEG est en effet connu pour sa grande biocompatibilité, ce qui en fait le matériau de choix pour la micro-impression des protéines et la culture des cellules vivantes.

Dans ce mode, pour parvenir au premier état A, une couche de PEG est mise en contact uniformément avec une solution aqueuse contenant de la benzophénone 3. Typiquement, cette couche est rincée avec une solution aqueuse contenant de la benzophénone PLPP, hydrosoluble.

La phase liquide de l'hydrogel contient donc à l'issue de ce rinçage préliminaire de la benzophénone. Les molécules de la benzophénone étant de petite taille, elles peuvent être proches de la matrice de l'hydrogel, sans lui être accrochées. L'hydrogel ainsi préparé est donc, au sens de l'invention, un hydrogel contenant ou comprenant une benzophénone (contenant ou comprenant s'appliquant à sa phase liquide). Cette définition s'applique dans tous les modes de réalisation.

Puis, la couche de PEG est mise en contact avec une couche uniforme d'oxygène, via un réservoir ou réserve d'oxygène, de façon connue. Les molécules d'oxygène diffusent alors aussi dans la phase liquide de l'hydrogel qui contient alors un mélange d'eau de benzophénone et d'oxygène 4.

Le gel ou hydrogel est alors illuminé sélectivement par une lumière 5, c'est-à-dire selon un motif spatial, pendant une durée variable au moyen d'une source émettant dans une bande d'absorption de la benzophénone, par exemple une source émettant une lumière ayant une longueur d'onde de 375 nm, comme un laser.

La source utilisée est par exemple une source laser de référence TOPTICA iBEAM-SMART 375-S émettant à 375nm et de puissance optique 75mW. Toute source d'UV-A (émettant entre 315-400 nm) et de puissance du même ordre de grandeur que la source mentionnée, serait cependant capable d'activer la benzophénone et de déclencher le mécanisme de photo-scission.

Il est particulièrement remarquable que cette source n'est pas une source pulsée de nature à volatiliser la matrice mais qu'elle est au contraire de faible puissance pour une source laser et continue.

Il est encore plus remarquable que la source utilisée peut être répartie sur le champ d'un microscope en conservant l'effet de photo-scission et que donc cette puissance correspond aussi à un éclairement faible dans l'hydrogel, ce qui permet d'obtenir la photo-scission dans un temps limité, estimé expérimentalement être de l'ordre de 2000s mais sur tous les points du champ, c'est-à-dire en champ large et donc en parallèle sur tous les points du volume de l'hydrogel, s'il est transparent pour la lumière de la source utilisée ou à proximité de sa surface sinon.

Il est à noter que l'éclairage sélectif peut aussi être effectué avec une ouverture numérique faible, cette caractéristique diminuant encore l'éclairement en un point mais permettant d'obtenir avec le procédé de l'invention, des découpes de surfaces micro-structurées sensiblement parallèles au rayon moyen du faisceau d'éclairage, ce qui notamment permet d'obtenir des canaux à flancs droits avec l'invention.

On remarque donc que partant de la photo-ablation d'un hydrogel, par un laser de puissance dit « femto-seconde » en rapport avec la durée de ses impulsions, laser qui est par nature le plus focalisé possible sur la surface, et d'ouverture numérique la plus grande possible, un homme du métier n'obtiendrait pas l'invention en diminuant la puissance du laser.

On remarque encore qu'un homme du métier pratiquant le photo-clivage avec des hydrogels modifiés par des radicaux chimiques attachés à la matrice n'obtiendrait pas l'effet de photo-scission de l'invention qui apparaît du point de vue de l'hydrogel comme un effet physique et donc d'une nature différente du photo-clivage.

Dans un deuxième mode de réalisation, un gel d'agarose connu de l'art antérieur, a été utilisé avec les mêmes résultats, notamment à la réalisation de tranchées dans le gel (c'est-à-dire de sillons creusés dans le gel jusqu'au substrat), ces possibilités de réalisation s'étendant à tous les modes de réalisation de l'invention. Avec la même méthode et le même dispositif que pour le PEG, une structuration a ainsi été obtenue pour un tel gel d'agarose. On trouve expérimentalement que le temps de photo-scission dans un hydrogel d'agarose est de l'ordre de 20000 s (secondes) soit une durée dix fois plus longue que dans un hydrogel de PEG.

Dans un troisième mode de réalisation, un hydrogel extrait de membrane basale connu sous le nom commercial « Matrigel » a été utilisé. Cet hydrogel est entièrement biocompatible et très répandu pour la culture cellulaire en trois dimensions (3D) en raison d'une viscoélasticité très favorable à cette culture. Toutefois, cet hydrogel manque de groupe fonctionnel chimique permettant son photo-clivage et donc sa structuration. Bien qu'il puisse être durci aux UV mélangé à un photo-initiateur, cette opération altère ses propriétés viscoélastiques et diminue d'autant son utilité pour la culture de cellules. Il n'existe pas en tous cas dans l'art antérieur, de moyen de le micro-structurer de façon soustractive ou en enlevant de la matière, par la lumière. Le temps de photo-scission a été estimé expérimentalement à 6000 s (secondes) dans le «Matrigel».

La méthode ou le procédé de l'invention peut être mise en œuvre de la même façon que pour les deux modes précédents. De plus, il est possible d'obtenir des hydrogels hétérogènes de PEG et de «Matrigel» («Matrigel» est produit, par exemple, par Corning Lab Sciences ou BD Sciences). On observe expérimentalement, en effet, que la photo-scission est beaucoup plus lente dans le « Matrigel » que dans le PEG. Il est donc possible d'utiliser comme substrat une couche de « Matrigel » lorsque l'on souhaite structurer une couche de PEG en déposant cette couche de PEG sur une couche de «Matrigel », elle-même déposée sur un substrat en verre ou en plastique ou sur un film de PDMS, le cas échéant.

Il est aussi possible avec le procédé selon l'invention, d'obtenir des hydrogels hétérogènes d'extrait de matrice de membrane basale, en particulier de « Matrigel », et de PEG, dans le plan d'une couche de PEG. Pour cela, on crée d'abord une structure de canaux microfluidiques dans la couche de PEG, grâce au procédé de l'invention, et on remplit ces canaux de « Matrigel », puis on réitère le procédé de l'invention sur le « Matrigel » pour obtenir sa structuration dans la structure des canaux de PEG. Commodément, on utilise pour cela une membrane, notamment en PDMS, perméable à l'oxygène et au photo-initiateur, et disposée en contact avec les zones à soustraire par éclairement. Cette membrane permet notamment de limiter l'extension du Matrigel dans le plan de la couche, à la structure de canaux du PEG. Le PDMS (polydiméthylsiloxane) étant transparent aux rayons ultraviolets, ou UV, on pourra d'ailleurs choisir d'éclairer d'abord via cette membrane (plutôt que via le substrat) dans le sens de propagation de la lumière, notamment pour mettre en œuvre l'invention avec un substrat peu ou pas transparent à la lumière utilisée pour obtenir la photo-scission. Dans tous les modes de réalisation de l'invention, en l'absence de membrane, on pourra aussi éclairer via la couche la plus éloignée du substrat, lorsque celui-ci est peu ou pas transparent.

La méthode ou le procédé de l'invention peut être mise en œuvre de la même façon que pour les modes précédents avec un hydrogel qui est un gel aqueux ou hydrogel de polyacrylamide, polymère de formule chimique [-CH2-CH(-CONH2)-]n . Le temps de photo-scission a été estimé expérimentalement à 4000 s (secondes) dans un hydrogel de polyacrylamide.

Le procédé selon l'invention apparaît ainsi susceptible de produire de nombreuses structures dans des hydrogels homogènes ou hétérogènes pour la culture cellulaire en 2D ou 3D.

Pour la sélection d'un hydrogel dans lequel la benzophénone soluble dans l'eau (et par extension dans les hydrogels) est susceptible de diffuser, il sera possible d'utiliser les propriétés de photoluminescence de la benzophénone, pour quantifier sans mettre en œuvre le procédé de l'invention, l'adaptation d'un hydrogel à l'invention. Pour cela, selon des techniques connues, on pourra mesurer la photoluminescence au fil du temps de la benzophénone, en un ou plusieurs points précis, pour sélectionner un hydrogel. La plus grande vitesse de diffusion de la benzophénone dans la matrice de l'hydrogel sera ainsi privilégiée.

De même on privilégiera pour l'invention, un hydrogel dans lequel la vitesse de diffusion de l'oxygène est plus grande que dans un autre, pour une biocompatibilité égale entre les deux hydrogels.

Avantageusement, le système d'illumination de l'invention comprendra un microscope et un DMD (ensemble micro-miroirs pilotés individuellement par un calculateur ou automatisé) pour permettre d'illuminer l'hydrogel selon un motif arbitraire et le structurer de diverses façons.

L'enseignement de l'invention s'étend à un substrat de nature variée. Le substrat pourra en effet être soit totalement insensible à la photo-scission, soit plus lentement dégradé par la photo-scission que l'hydrogel qu'il supporte. Des exemples de substrats insensibles à la photo-scission sont le verre et le plastique ou un film de PDMS (Polydiméthylsiloxane ou diméthicone). Selon un autre exemple de substrat, comme mentionné ci-dessus, une couche de « Matrigel », qui subit la photo-scission à une vitesse beaucoup plus lente que le « PEG », peut être utilisée comme substrat pour un hydrogel de PEG, par rapport auquel elle se photo-dégrade plus lentement.

L'enseignement de l'invention s'étend d'ailleurs aussi à l'obtention d'un empilement structuré de plusieurs hydrogels en couches superposées sur un substrat et s'étend aussi à l'empilement lui-même obtenu par le procédé de l'invention.

Notamment l'enseignement de l'invention s'étend à un empilement comprenant au moins deux couches, ayant des temps de photo-scission différents.

Il sera en effet possible avec de tels empilements d'obtenir des structures complexes par le procédé de l'invention, en appliquant successivement ce procédé à chaque couche à soustraire et en adaptant le temps d'illumination et le motif d'illumination à la couche visée par l'illumination.

Dans le cas de deux couches d'hydrogel sur un substrat : pour une couche sacrificielle, on pourra ainsi choisir un temps de photo-scission décroissant vers le substrat et pour des marches en escalier descendant vers le substrat, on pourra choisir un temps de photo-scission croissant vers le substrat ainsi que des surfaces d'illumination décroissantes vers le substrat.

Dans tous les cas, le principe utilisé sera de transformer une partie illuminée d'un hydrogel en liquide et l'évacuer, sans liquéfier un autre hydrogel, de temps de photo-scission plus long.

L'homme du métier pourra ainsi structurer avec le procédé de l'invention, de façon soustractive, un empilement d'hydrogels, à partir de la simple connaissance du temps de photo-scission pour chaque type d'hydrogel intervenant dans l'empilement.

De façon commode, l'homme du métier obtiendra cette structuration en une seule fois dans le plein champ ou champ large d'un système d'illumination automatisé, aussi bien pour une couche de l'empilement ou pour plusieurs à la fois, en fonction du temps de photo-scission dans l'empilement, du temps d'éclairement et du motif éclairé dans l'empilement.

Le procédé de l'invention et les nombreux produits qui peuvent être obtenus par ce procédé en font donc finalement un moyen général de structuration d'une couche d'hydrogel ou d'un empilement de couches d'hydrogels sur un substrat, par soustraction de matière.

Le procédé selon l'invention est susceptible d'application industrielle dans le domaine de la culture à trois dimensions (3D) de cellules sur une couche d'hydrogel ou sur un empilement de couches d'hydrogels.

## Revendications

1. Procédé soustractif pour la structuration d'un hydrogel comprenant les étapes suivantes:
- réaliser sur un substrat (6) une couche d'hydrogel contenant une benzophénone (3), l'hydrogel ne possédant pas de groupement photo-clivable;
- mettre en contact la couche d'hydrogel avec un réservoir d'oxygène (4) ;
- éclairer sélectivement la couche d'hydrogel avec une lumière (5) capable d'activer la benzophénone, pour transformer la zone éclairée de la couche d'hydrogel en un liquide;
- éliminer le liquide.

2. Procédé selon la revendication 1, dans lequel l'hydrogel est un hydrogel de polyéthylène glycol.

3. Procédé selon la revendication 1, dans lequel l'hydrogel est un hydrogel d'agarose.

4. Procédé selon la revendication 1, dans lequel l'hydrogel est un hydrogel de polyacrylamide.

5. Procédé selon l'une quelconque des revendications 1 à 4, dans lequel l'éclairement sélectif est effectué selon un canal s'étendant dans l'hydrogel.

6. Procédé selon l'une quelconque des revendications 1 à 5, dans lequel l'éclairement sélectif est obtenu au moyen d'une source lumineuse émettant entre 315 et 400 nm.

7. Procédé selon la revendication 6, dans lequel la source lumineuse émet de la lumière (5) à 375 nm.

8. Procédé selon l'une quelconque des revendications 1 à 7, dans lequel l'éclairement sélectif est obtenu via un microscope et s'étend dans un champ large du microscope.

9. Procédé selon l'une quelconque des revendications 1 à 8, dans lequel la benzophénone (3) est une PLPP (4-benzoylbenzyl)trimethylammonium chloride).

10. Procédé selon la revendication 6 ou 7, dans lequel la source lumineuse comprend un laser continu et un modulateur spatial.

11. Procédé selon la revendication 10, dans lequel le modulateur spatial est une matrice de micro-miroirs.

## Patentansprüche

1. Subtraktives Verfahren zur Strukturierung eines Hydrogels, aufweisend die folgenden Schritte:
- Herstellen einer Hydrogelschicht, die ein Benzophenon (3) enthält, auf einem Substrat (6), wobei das Hydrogel keine fotospaltbare Gruppe besitzt;
- Inkontaktbringen der Hydrogelschicht mit einem Sauerstoffreservoir (4);
- selektives Beleuchten der Hydrogelschicht mit Licht (5), das in der Lage ist, das Benzophenon zu aktivieren, um den beleuchteten Bereich der Hydrogelschicht in eine Flüssigkeit zu verwandeln;
- die Flüssigkeit zu entfernen.

2. Verfahren nach Anspruch 1, wobei das Hydrogel ein Polyethylenglykol-Hydrogel ist.

3. Verfahren nach Anspruch 1, wobei das Hydrogel ein Agarose-Hydrogel ist.

4. Verfahren nach Anspruch 1, wobei das Hydrogel ein Polyacrylamid-Hydrogel ist.

5. Verfahren nach einem der Ansprüche 1 bis 4, wobei die selektive Beleuchtung entlang eines Kanals erfolgt, der sich durch das Hydrogel erstreckt.

6. Verfahren nach einem der Ansprüche 1 bis 5, wobei die selektive Beleuchtung mithilfe einer Lichtquelle erfolgt, die zwischen 315 und 400 nm emittiert.

7. Verfahren nach Anspruch 6, wobei die Lichtquelle Licht (5) bei 375 nm emittiert.

8. Verfahren nach einem der Ansprüche 1 bis 7, wobei die selektive Beleuchtung über ein Mikroskop durchgeführt wird und diese sich über ein breites Feld des Mikroskops erstreckt.

9. Verfahren nach einem der Ansprüche 1 bis 8, wobei das Benzophenon (3) ein PLPP (4-Benzoylbenzyl)trimethylammoniumchlorid) ist.

10. Verfahren nach Anspruch 6 oder 7, wobei die Lichtquelle einen kontinuierlichen Laser und einen räumlichen Modulator aufweist.

11. Verfahren nach Anspruch 10, wobei der räumliche Modulator eine Matrix aus Mikrospiegeln aufweist.

## Claims

1. A subtractive method for structuring a hydrogel comprising the following steps:
- producing a hydrogel layer containing a benzophenone (3) on a substrate (6), the hydrogel not possessing a photocleavable group;
- bringing the hydrogel layer into contact with an oxygen reservoir (4);
- selectively illuminating the hydrogel layer with light (5) capable of activating the benzophenone, to transform the illuminated zone of the hydrogel layer into a liquid;
- removing the liquid.

2. The method as claimed in claim 1, in which the hydrogel is a hydrogel of polyethylene glycol.

3. The method as claimed in claim 1, in which the hydrogel is a hydrogel of agarose.

4. The method as claimed in claim 1, in which the hydrogel is a hydrogel of polyacrylamide.

5. The method as claimed in any one of claims 1 to 4, in which the selective illumination is carried out along a channel extending in the hydrogel.

6. The method as claimed in any one of claims 1 to 5, in which the selective illumination is obtained by means of a light source emitting between 315 and 400 nm.

7. The method as claimed in claim 6, in which the light source emits light (5) at 375 nm.

8. The method as claimed in any one of claims 1 to 7, in which the selective illumination is obtained via a microscope and extends in a wide field of the microscope.

9. The method as claimed in any one of claims 1 to 8, in which the benzophenone (3) is a PLPP ((4-benzoylbenzyl)trimethylammonium chloride).

10. The method as claimed in claim 6 or 7, in which the light source comprises a continuous laser and a spatial modulator.

11. The method as claimed in claim 10, in which the spatial modulator is an array of micromirrors.
